# EUROPEAN PATENT APPLICATION

(11) **EP 4 707 341 A1**
(43) Date of publication of application: **11.03.2026**
(21) Application number: 25811893.4
(22) Date of filing: 14.05.2025
(51) Int. Cl.: C09B 56/08

(54) **METHOD FOR PREPARING YELLOW AZO OXIDE AND AZO DISTYRYLBENZENE DYES**

(30) Priority: 27.05.2024 CN 202410661947
(71) Applicant: Luoyang Meilun Color Technology Co., Ltd., Luoyang, Henan 471112 (CN)
(72) Inventor: CHEN, Huiling, Luoyang, Henan 471112 (CN); LI, Han, Luoyang, Henan 471112 (CN)
(74) Representative: Santarelli
(86) International application number: PCT/CN2025/094727
(87) International publication number: WO 2025/246928

(57) **Abstract**

Provided is a preparation method for a yellow oxidized azo and azo-stilbene dye, including the following steps: taking 4-nitrotoluene-2-sulfonic acid as a starting material, and taking water as a reaction solvent to obtain Direct Yellow 11 through a condensation reaction in the presence of choline hydroxide. A molecular structure of choline hydroxide contains both a quaternary ammonium group and a hydroxyl group. The hydroxyl group provides additional hydrophilicity, which is conducive to improving the solubility and dispersibility of the dye in aqueous media, thereby enhancing affinity of the dye with fibers. Choline hydroxide can effectively provide the alkaline environment required for the reaction, promoting the progress of dye synthesis, and controlling the selectivity and yield of the reaction better. The choline hydroxide can form hydrogen bonds with the sulfonic acid groups in the dye molecules, thereby enhancing intermolecular stability and improving light fastness and acid/alkali resistance of Direct Yellow 11.

## Description

### Technical Field

The present invention relates to the technology of oxidized azo and azo-stilbene dyes, and in particular to a preparation method for an oxidized azo and azo-stilbene dye.

### Background of the Invention

In the papermaking and printing industries, oxidized azo and azo-stilbene dyes are widely used in the dyeing of paper and packaging materials due to their bright colors and efficient dyeing properties. Among these dyes, Direct Yellow 11 has become a most important and valuable dye because of its extensive commercial application. However, conventional production methods for Direct Yellow 11 suffer from several problems, including low yield, poor solubility and dispersibility of the dye in aqueous media, and limited affinity with fibers, restricting its broader application in the field of high-quality printing and dyeing. Therefore, there is an urgent need to develop a new preparation method to improve the performance and production efficiency of Direct Yellow 11.

In the prior art, sodium hydroxide (NaOH) is often used as an alkaline substance to prepare azostilbene-based azo dyes. However, this production process has some technical challenges, such as the need for subsequent filtration or ultrafiltration steps, which makes the process complicated. In addition, the resulting product requires the addition of organic amines for stabilization, which is unfavorable for subsequent use.

Another commonly used technical route employs tetraalkylammonium hydroxide (with a structure of OH⁻ N⁺(R)₄, where R is a C1-C4 alkyl group, and all tetraalkylammonium hydroxides mentioned herein fall within the structural category) as strong organic bases in the preparation of azo-stilbene yellow dyes (CN 110373040 A). However, a quaternary ammonium salt structure of tetraalkylammonium hydroxides is overly hydrophobic, resulting in poor solubility and dispersibility of the dyes in aqueous media, thereby adversely affecting dye affinity and dyeing performance of the dyes.

### Summary of the Invention

The present invention aims to address the challenges in the production of Direct Yellow 11 in the prior art, particularly the challenges associated with tetraalkylammonium hydroxide (with a structure of OH⁻ N⁺(R)₄, where R is a C1-C4 alkyl group, and all tetraalkylammonium hydroxides mentioned herein fall within the structural category) as an alkaline reactant, including poor solubility and dispersibility of the dye, limited affinity with fibers, and insufficient alkaline strength. To address these issues, the present invention provides a method for preparing Direct Yellow 11 using choline hydroxide as an alkaline reactant. A molecular structure of choline hydroxide contains both a quaternary ammonium group and a hydroxyl group. The hydroxyl group provides additional hydrophilicity, which is conducive to improving the solubility and dispersibility of the dye in aqueous media, thereby enhancing affinity of the dye with fibers. In addition, choline hydroxide, as a strong base, can effectively provide the alkaline environment required for the reaction, promoting the progress of dye synthesis, and potentially allowing for better control over the selectivity and yield of the reaction. Furthermore, due to the presence of hydroxyl groups in choline hydroxide molecules, the choline hydroxide can form hydrogen bonds with the sulfonic acid groups in the dye molecules, thereby enhancing intermolecular stability and improving both light fastness and acid/alkali resistance. In contrast, tetramethylammonium hydroxide lacks hydroxyl groups capable of forming hydrogen bonds, resulting in weaker interaction with dye molecules and reduced stability and durability. Therefore, using choline hydroxide as the alkaline reactant not only solves the problems existing in tetraalkylammonium hydroxide, but also significantly improves the performance of Direct Yellow 11, providing a better technical solution for the production of Direct Yellow 11.

In order to solve the above technical problems, the present invention adopts the following technical solution:
a preparation method for a yellow oxidized azo and azo-stilbene dye, 4-nitrotoluene-2-sulfonic acid is taken as a starting material, and water is taken as a reaction solvent to obtain Direct Yellow 11 through a condensation reaction in the presence of choline hydroxide.

Further, the preparation method for a yellow oxidized azo and azo-stilbene dye includes the following steps:
(1) preparation of an aqueous solution of choline hydroxide: adding an aqueous solution of trimethylamine to a reactor, slowly adding ethylene oxide to the reactor, and maintaining a reaction temperature at 35-40°C for 3-4 h after feeding of the materials to obtain an aqueous solution of choline hydroxide, with a reaction route as follows: 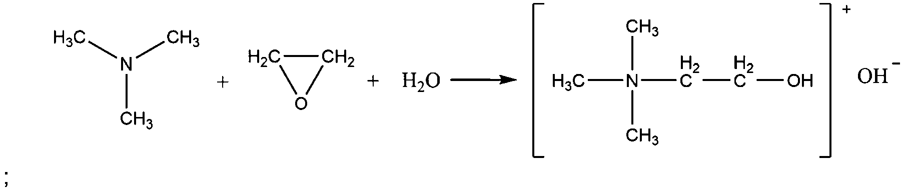
(2) condensation reaction: adding a 4-nitrotoluene-2-sulfonic acid solution to the aqueous solution of choline hydroxide, and allowing for a reaction at 45-85°C for 4-8 h to obtain a mixed solution containing Direct Yellow 11; and
(3) adding hydrochloric acid to the mixed solution containing Direct Yellow 11 obtained in the step (2) to adjust pH of the mixed solution to 7-9 to obtain a yellow transparent solution containing Direct Yellow 11.

Further, in the step (1), an initial temperature is controlled at 5-15°C after adding an aqueous solution of trimethylamine to a reactor; and a feeding temperature must not exceed 30°C, and a total feeding duration is controlled at 2-3 h when slowly adding ethylene oxide to the reactor.

Further, in the step (1), a mass concentration of the aqueous solution of trimethylamine is 25%-45%, and preferably 30%.

Further, in the step (1), a molar ratio of the trimethylamine to the ethylene oxide is 1:1.05-1:1.35, and preferably 1:1.10.

Further, in the step (1), a mass concentration of the aqueous solution of choline hydroxide is 30%-50%.

Further, in the step (2), a temperature is 20-45°C when adding a 4-nitrotoluene-2-sulfonic acid solution to the aqueous solution of choline hydroxide, with an addition process controlled at 30-60 min.

In the step (2), a mass concentration of the 4-nitrotoluene-2-sulfonic acid solution is 30%-55%, and a molar ratio of the 4-nitrotoluene-2-sulfonic acid to the choline hydroxide is 1:1.5-1:2.5, and preferably 1:1.8.

A structural formula of Direct Yellow 11 is as follows: 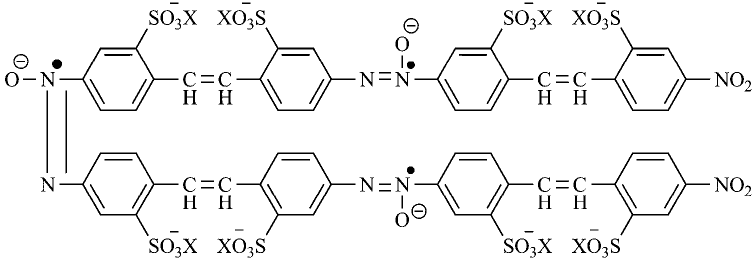 where X represents OH(CH₂)₂N^{⊕}(CH₃)₃ group.

The present invention further provides the yellow oxidized azo and azo-stilbene dye, where the yellow oxidized azo and azo-stilbene dye is a mixture solution that takes Direct Yellow 11 as a main component, having a maximum absorption wavelength of 410-435 nm.

By adopting the above technical solutions, the present invention has the following beneficial effects:
The present invention employs choline hydroxide as the alkaline reactant, which reacts with 4-nitrotoluene-2-sulfonic acid to prepare Direct Yellow 11. First, compared with tetramethylammonium hydroxide, choline hydroxide contains a hydroxyl group in its molecular structure. The hydroxyl group provides additional hydrophilicity, improving the solubility and dispersibility of the dye in aqueous media, thereby enhancing affinity of the dye with fibers. In addition, a condensation reaction requires strong alkaline conditions. Choline hydroxide, as a strong base, can more readily provide the required alkaline environment, thereby improving the purity and yield of the dye. Therefore, the use of choline hydroxide not only optimizes the reaction conditions and improves the purity and yield of the dye, but also significantly improves the performance of Direct Yellow 11, demonstrating a breakthrough in both technical innovation and performance improvement. Specifically:
1. Improved dye performance: due to the molecular structural characteristics of choline hydroxide, Direct Yellow 11 prepared by the present invention significantly enhances its affinity with fibers, as well as light fastness and acid/alkali resistance of the dye.
2. Improved yield and purity: The strong alkalinity of choline hydroxide is conducive to optimizing the reaction conditions, increasing the synthesis yield and purity of Direct Yellow 11, thereby reducing production cost and improving product quality.

### Brief Description of the Drawings

FIG. 1 illustrates colorimeter test results after dyeing blank paper using Direct Yellow 11 prepared with tetramethylammonium hydroxide (a standard sample) and choline hydroxide (a batch sample) as an alkaline reactant, respectively.
FIG. 2 illustrates colorimeter test results after dyeing blank paper with Direct Yellow 11 prepared using choline hydroxide as the alkaline reactant (a standard sample) and then adding alkali (a batch sample).
FIG. 3 illustrates colorimeter test results after dyeing blank paper with Direct Yellow 11 prepared using tetramethylammonium hydroxide as the alkaline reactant (a standard sample) and then adding alkali (a batch sample).
FIG. 4 illustrates colorimeter test results after dyeing blank paper with Direct Yellow 11 prepared using choline hydroxide as the alkaline reactant (a standard sample) and then adding acid (a batch sample).
FIG. 5 illustrates colorimeter test results after dyeing blank paper with Direct Yellow 11 prepared using tetramethylammonium hydroxide as the alkaline reactant (a standard sample) and then adding acid (a batch sample).
FIG. 6 illustrates colorimeter test results after dyeing blank paper with Direct Yellow 11 prepared using choline hydroxide as the alkaline reactant (a standard sample), and after exposure to light (a batch sample).
FIG. 7 illustrates colorimeter test results after dyeing blank paper with Direct Yellow 11 prepared using tetramethylammonium hydroxide as the alkaline reactant (a standard sample), and after exposure to light (a batch sample).

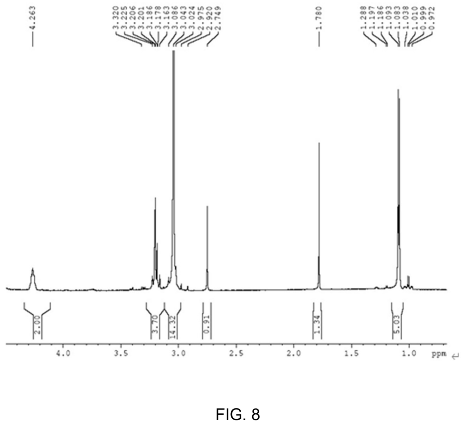

FIG. 8 is an NMR spectrum of a yellow oxidized azo and azo-stilbene dye, that is, Direct Yellow 11, prepared in Example 1.

### Detailed Description of Embodiments

The present invention will be further described below in conjunction with specific examples. It should be understood that the following examples are intended only to illustrate the present invention and are not intended to limit the scope of the present invention. Those skilled in the art may make various non-essential improvements and adjustments based on the disclosure of the present invention.

### Example 1

This example provides a preparation method for a yellow oxidized azo and azo-stilbene dye, including the following steps:
(1) Preparation of an aqueous solution of choline hydroxide: an aqueous solution of trimethylamine with a mass concentration of 30% was added to a reactor, and an initial temperature was controlled at 15 °C; ethylene oxide was then slowly added to the reactor at a molar ratio of the trimethylamine to the ethylene oxide of 1:1.10, a temperature inside the reactor was controlled to continue to rise, a feeding temperature was not allowed to exceed 30°C (when the temperature reached 30 °C, the feeding was stopped and resumed only after cooling), and a total feeding duration was controlled within 2 h; after completion of the feeding, the resulting mixture was kept at 40°C for 3 h to obtain an aqueous solution of choline hydroxide; and an appropriate amount of water was added for adjustment to obtain an aqueous solution of choline hydroxide with a mass concentration of 45%, with a reaction route as follows: 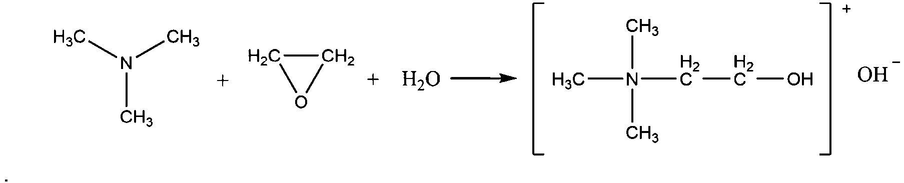
(2) condensation reaction stage: a 4-nitrotoluene-2-sulfonic acid solution with a mass concentration of 45% was added dropwise to the aqueous solution of choline hydroxide with a mass concentration of 45% (with a system temperature maintained at 40 °C), a molar ratio of 4-nitrotoluene-2-sulfonic acid to choline hydroxide was 1:1.8, and the resulting mixture was stirred to obtain a blue-violet solution, which was stirred and reacted at 70 °C for 5 h, and after completion of the reaction, a reddish-brown transparent solution was obtained;
(3) hydrochloric acid with a mass fraction of 30% was added to the reddish-brown transparent solution to adjust pH to 7, to obtain a yellow transparent solution with a maximum absorption wavelength of 420 nm.

A structural formula I of the dye is shown as below: 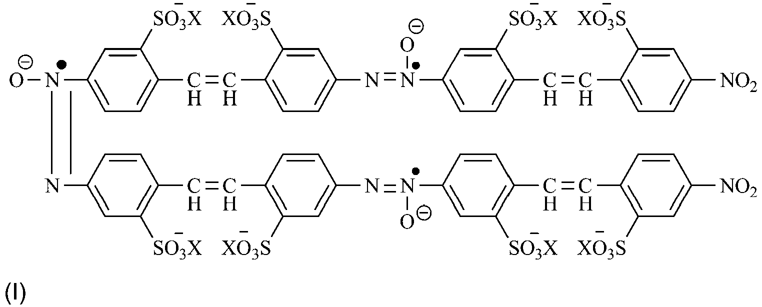 where X represents OH(CH₂)₂N^{⊕}(CH₃)₃ group.

### Example 2

This example provides a preparation method for a yellow oxidized azo and azo-stilbene dye, including the following steps:
(1) Preparation of an aqueous solution of choline hydroxide: an aqueous solution of trimethylamine with a mass concentration of 25% was added to a reactor, and an initial temperature was controlled at 5°C; ethylene oxide was then slowly added to the reactor at a molar ratio of the trimethylamine to the ethylene oxide of 1:1.05, a temperature inside the reactor was controlled to continue to rise, a feeding temperature was not allowed to exceed 30°C (when the temperature reached 30 °C, the feeding was stopped and resumed only after cooling), and a total feeding duration was controlled within 3 h; after completion of the feeding, the resulting mixture was kept at 35°C for 4 h to obtain an aqueous solution of choline hydroxide; and an appropriate amount of water was added for adjustment to obtain an aqueous solution of choline hydroxide with a mass concentration of 30%;
(2) condensation reaction stage: a 4-nitrotoluene-2-sulfonic acid solution with a mass concentration of 30% was added dropwise to the aqueous solution of choline hydroxide with a mass concentration of 30% (with a system temperature maintained at 20°C), a molar ratio of 4-nitrotoluene-2-sulfonic acid to choline hydroxide was 1:1.5, and the resulting mixture was stirred to obtain a blue-violet solution, which was stirred and reacted at 45°C for 6 h, and after completion of the reaction, a reddish-brown transparent solution was obtained;
(3) hydrochloric acid with a mass fraction of 30% was added to the reddish-brown transparent solution to adjust pH to 9, to obtain a yellow transparent solution with a maximum absorption wavelength of 410 nm.

### Example 3

This example provides a preparation method for a yellow oxidized azo and azo-stilbene dye, including the following steps:
(1) Preparation of an aqueous solution of choline hydroxide: an aqueous solution of trimethylamine with a mass concentration of 35% was added to a reactor, and an initial temperature was controlled at 10°C; ethylene oxide was then slowly added to the reactor at a molar ratio of the trimethylamine to the ethylene oxide of 1:1.35, a temperature inside the reactor was controlled to continue to rise, a feeding temperature was not allowed to exceed 30°C (when the temperature reached 30 °C, the feeding was stopped and resumed only after cooling), and a total feeding duration was controlled within 2.5 h; after completion of the feeding, the resulting mixture was kept at 35°C for 4 h to obtain an aqueous solution of choline hydroxide; and an appropriate amount of water was added for adjustment to obtain an aqueous solution of choline hydroxide with a mass concentration of 50%;
(2) condensation reaction stage: a 4-nitrotoluene-2-sulfonic acid solution with a mass concentration of 35% was added dropwise to the aqueous solution of choline hydroxide with a mass concentration of 50% (with a system temperature maintained at 30°C), a molar ratio of 4-nitrotoluene-2-sulfonic acid to choline hydroxide was 1:2.5, and the resulting mixture was stirred to obtain a blue-violet solution, which was stirred and reacted at 85°C for 4 h, and after completion of the reaction, a reddish-brown transparent solution was obtained;
(3) hydrochloric acid with a mass fraction of 30% was added to the reddish-brown transparent solution to adjust pH to 7-9, to obtain a yellow transparent solution with a maximum absorption wavelength of 435 nm.

### Example 4

This example provides a preparation method for a yellow oxidized azo and azo-stilbene dye, including the following steps:
(1) Preparation of an aqueous solution of choline hydroxide: an aqueous solution of trimethylamine with a mass concentration of 40% was added to a reactor, and an initial temperature was controlled at 12°C; ethylene oxide was then slowly added to the reactor at a molar ratio of the trimethylamine to the ethylene oxide of 1:1.2, a temperature inside the reactor was controlled to continue to rise, a feeding temperature was not allowed to exceed 30°C (when the temperature reached 30 °C, the feeding was stopped and resumed only after cooling), and a total feeding duration was controlled within 3 h; after completion of the feeding, the resulting mixture was kept at 40°C for 3 h to obtain an aqueous solution of choline hydroxide; and an appropriate amount of water was added for adjustment to obtain an aqueous solution of choline hydroxide with a mass concentration of 35%;
(2) condensation reaction stage: a 4-nitrotoluene-2-sulfonic acid solution with a mass concentration of 40% was added dropwise to the aqueous solution of choline hydroxide with a mass concentration of 35% (with a system temperature maintained at 45°C), a molar ratio of 4-nitrotoluene-2-sulfonic acid to choline hydroxide was 1:2.2, and the resulting mixture was stirred to obtain a blue-violet solution, which was stirred and reacted at 75°C for 4 h, and after completion of the reaction, a reddish-brown transparent solution was obtained;
(3) hydrochloric acid with a mass fraction of 30% was added to the reddish-brown transparent solution to adjust pH to 8, to obtain a yellow transparent solution with a maximum absorption wavelength of 425 nm.

### Example 5

This example provides a preparation method for a yellow oxidized azo and azo-stilbene dye, including the following steps:
(1) Preparation of an aqueous solution of choline hydroxide: an aqueous solution of trimethylamine with a mass concentration of 45% was added to a reactor, and an initial temperature was controlled at 15°C; ethylene oxide was then slowly added to the reactor at a molar ratio of the trimethylamine to the ethylene oxide of 1:1.3, a temperature inside the reactor was controlled to continue to rise, a feeding temperature was not allowed to exceed 30°C (when the temperature reached 30 °C, the feeding was stopped and resumed only after cooling), and a total feeding duration was controlled within 3 h; after completion of the feeding, the resulting mixture was kept at 37°C for 4 h to obtain an aqueous solution of choline hydroxide; and an appropriate amount of water was added for adjustment to obtain an aqueous solution of choline hydroxide with a mass concentration of 40%;
(2) condensation reaction stage: a 4-nitrotoluene-2-sulfonic acid solution with a mass concentration of 45% was added dropwise to the aqueous solution of choline hydroxide with a mass concentration of 40% (with a system temperature maintained at 35°C), a molar ratio of 4-nitrotoluene-2-sulfonic acid to choline hydroxide was 1:2.0, and the resulting mixture was stirred to obtain a blue-violet solution, which was stirred and reacted at 65°C for 6 h, and after completion of the reaction, a reddish-brown transparent solution was obtained;
(3) hydrochloric acid with a mass fraction of 30% was added to the reddish-brown transparent solution to adjust pH to 7, to obtain a yellow transparent solution with a maximum absorption wavelength of 415 nm.

### Example 6

This example provides a preparation method for a yellow oxidized azo and azo-stilbene dye, including the following steps:
(1) Preparation of an aqueous solution of choline hydroxide: an aqueous solution of trimethylamine with a mass concentration of 30% was added to a reactor, and an initial temperature was controlled at 15°C; ethylene oxide was then slowly added to the reactor at a molar ratio of the trimethylamine to the ethylene oxide of 1:1.25, a temperature inside the reactor was controlled to continue to rise, a feeding temperature was not allowed to exceed 30°C (when the temperature reached 30 °C, the feeding was stopped and resumed only after cooling), and a total feeding duration was controlled within 2.5 h; after completion of the feeding, the resulting mixture was kept at 36°C for 4 h to obtain an aqueous solution of choline hydroxide; and an appropriate amount of water was added for adjustment to obtain an aqueous solution of choline hydroxide with a mass concentration of 45%;
(2) condensation reaction stage: a 4-nitrotoluene-2-sulfonic acid solution with a mass concentration of 55% was added dropwise to the aqueous solution of choline hydroxide with a mass concentration of 45% (with a system temperature maintained at 25°C), a molar ratio of 4-nitrotoluene-2-sulfonic acid to choline hydroxide was 1:1.8, and the resulting mixture was stirred to obtain a blue-violet solution, which was stirred and reacted at 80°C for 4 h, and after completion of the reaction, a reddish-brown transparent solution was obtained;
(3) hydrochloric acid with a mass fraction of 30% was added to the reddish-brown transparent solution to adjust pH to 9, to obtain a yellow transparent solution with a maximum absorption wavelength of 430 nm.

### Comparative Example 1

In Comparative Example 1, Direct Yellow 11 was prepared by directly using tetramethylammonium hydroxide as an alkaline reactant according to the method disclosed in CN 110373040 A.

The performance of the Direct Yellow 11 obtained in Example 1 and Comparative Example 1 was compared as follows:

### I. Comparison of affinity with fibers

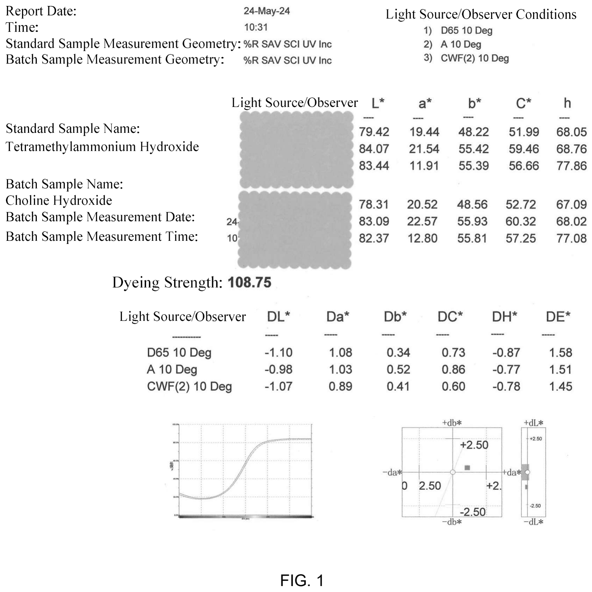

As shown in FIG. 1, the figure illustrates the colorimeter test results after dyeing blank paper using Direct Yellow 11 prepared with tetramethylammonium hydroxide (a standard sample, i.e., Comparative Example 1) and choline hydroxide (a batch sample, i.e., Example 1) as the alkaline reactant, respectively.

As can be seen from the results, the batch sample had a dyeing strength of 108.75 on paper, greater than that of the standard sample (100), indicating that the Direct Yellow 11 prepared by using choline hydroxide as the alkaline reactant and reacting with 4-nitrotoluene-2-sulfonic acid has a stronger affinity with fibers. This is because a molecular structure of choline hydroxide contains both a quaternary ammonium group and a hydroxyl group. The hydroxyl group provides additional hydrophilicity, which is conducive to improving the solubility and dispersibility of the dye in aqueous media, thereby enhancing affinity of the dye with fibers.

### II. Comparison of alkali resistance

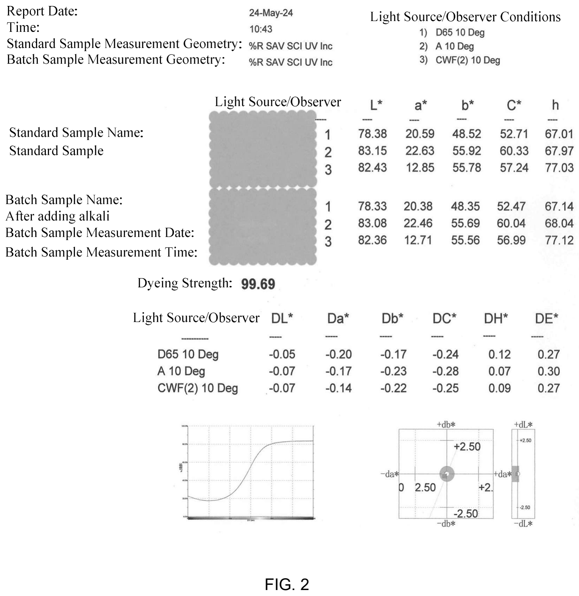

As shown in FIG. 2, the figure illustrates the colorimeter test results after dyeing blank paper with Direct Yellow 11 prepared using choline hydroxide as the alkaline reactant (a standard sample, i.e., Example 1) and then adding alkali (a batch sample).

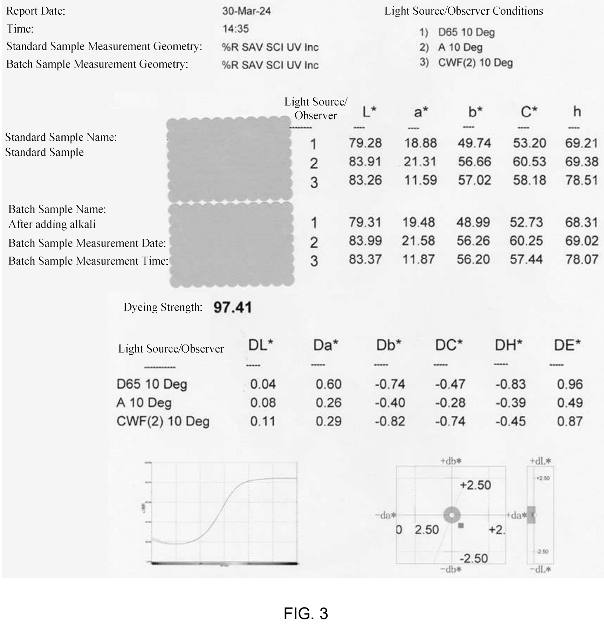

As shown in FIG. 3, the figure illustrates the colorimeter test results after dyeing blank paper with Direct Yellow 11 prepared using tetramethylammonium hydroxide as the alkaline reactant (a standard sample, i.e., Comparative Example 1) and then adding alkali (a batch sample).

As can be seen from the results, Direct Yellow 11 prepared using choline hydroxide achieved a dye strength of 99.69 in an alkaline environment, maintaining good dye strength. However, Direct Yellow 11 prepared using tetramethylammonium hydroxide as the alkaline reactant had a dye strength of 97.41 on paper in an alkaline environment, indicating a decrease in dye strength. Therefore, Direct Yellow 11 prepared using choline hydroxide as the alkaline reactant demonstrated stronger alkali resistance.

### III. Comparison of acid resistance

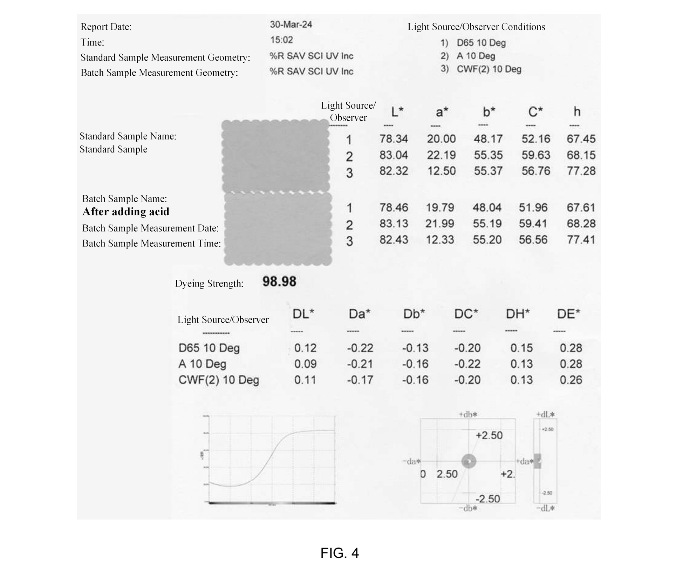

As shown in FIG. 4, the figure illustrates the colorimeter test results after dyeing blank paper with Direct Yellow 11 prepared using choline hydroxide as the alkaline reactant (a standard sample, i.e., Example 1) and then adding acid (a batch sample).

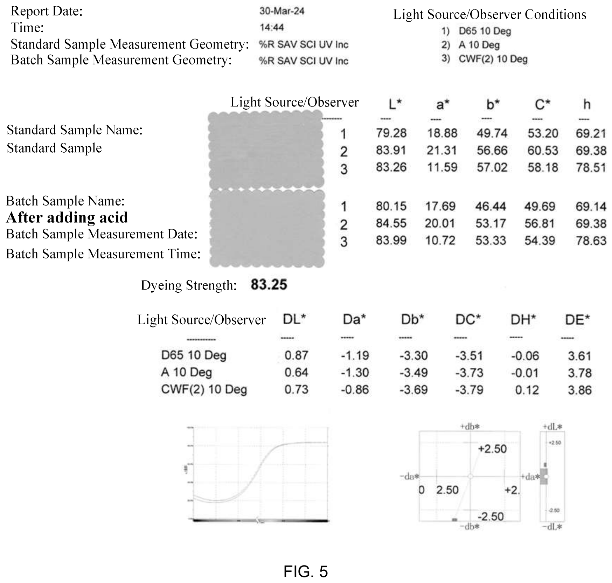

As shown in FIG. 5, the figure illustrates the colorimeter test results after dyeing blank paper with Direct Yellow 11 prepared using tetramethylammonium hydroxide as the alkaline reactant (a standard sample, i.e., Comparative Example 1) and then adding acid (a batch sample).

As can be seen from the results, Direct Yellow 11 prepared using choline hydroxide achieved a dye strength of 98.98 in an acid environment, maintaining good dye strength. Direct Yellow 11 prepared using tetramethylammonium hydroxide as the alkaline reactant had a dye strength of 83.25 on paper in an acid environment. The comparison clearly demonstrates that Direct Yellow 11 prepared using choline hydroxide as the alkaline reactant exhibited superior acid resistance.

### IV. Comparison of light fastness

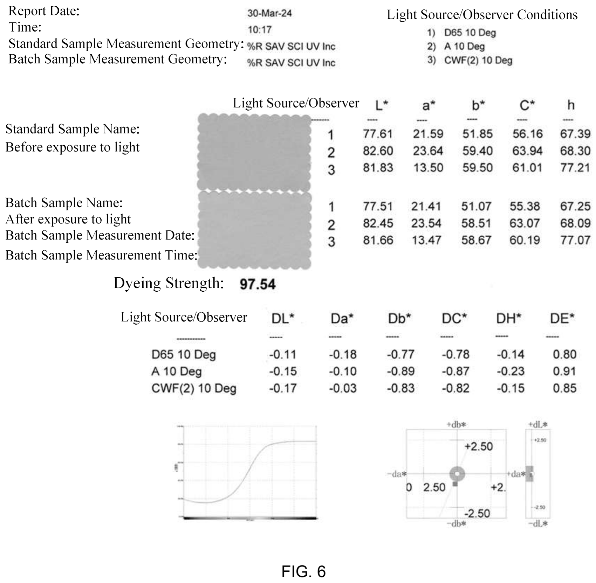

As shown in FIG. 6, the figure illustrates the colorimeter test results after dyeing blank paper with Direct Yellow 11 prepared using choline hydroxide as the alkaline reactant (a standard sample, i.e., Example 1), and after exposure to light (a batch sample).

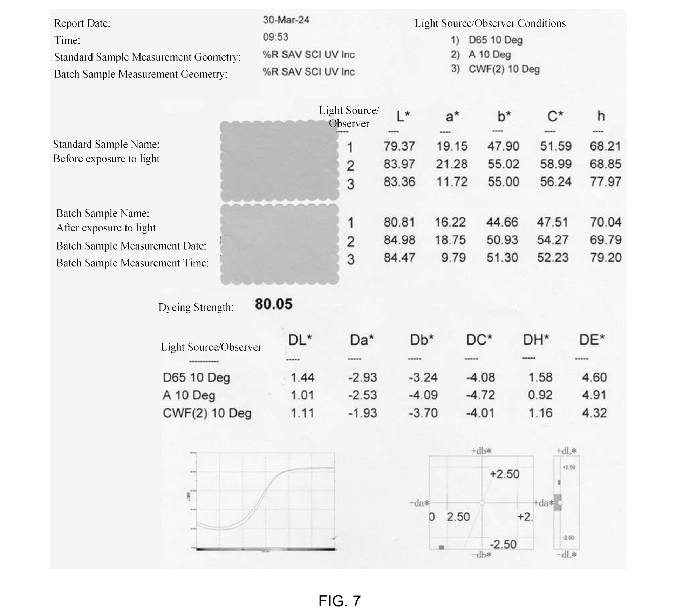

As shown in FIG. 7, the figure illustrates the colorimeter test results after dyeing blank paper with Direct Yellow 11 prepared using tetramethylammonium hydroxide as the alkaline reactant (a standard sample, i.e., Comparative Example 1), and after exposure to light (a batch sample).

As can be seen from the results, Direct Yellow 11 prepared using choline hydroxide achieved a dye strength of 97.54 in an acid environment, maintaining good dye strength. Direct Yellow 11 prepared using tetramethylammonium hydroxide as the alkaline reactant had a dye strength of 80.05 on paper in an acid environment. Therefore, Direct Yellow 11 prepared using choline hydroxide as the alkaline reactant demonstrated stronger light fastness.

Due to the presence of hydroxyl groups in choline hydroxide molecules, the choline hydroxide can form hydrogen bonds with the sulfonic acid groups in the dye molecules, thereby enhancing intermolecular stability and improving both light fastness and acid/alkali resistance. In contrast, tetramethylammonium hydroxide lacks hydroxyl groups capable of forming hydrogen bonds, resulting in weaker interaction with dye molecules and reduced stability and durability. Therefore, using choline hydroxide as the alkaline reactant not only solves the problems existing in tetramethylammonium hydroxide, but also significantly improves the performance of Direct Yellow 11, providing a better technical solution for the production of Direct Yellow 11.

What is shown and described above is about basic principles, essential features and advantages of the present invention. It should be understood by those skilled in the art that, the present invention is not limited by the embodiments described above. The embodiments described above and the descriptions in the description merely illustrate the principles of the present invention. Various changes and modifications may be made to the present invention without departing from the spirit and scope of the present invention. These changes and modifications all fall within the claimed scope of the present invention. The claimed scope of the present invention is defined by the appended claims and their equivalents.

## Claims

1. A preparation method for a yellow oxidized azo and azo-stilbene dye, **characterized in that** 4-nitrotoluene-2-sulfonic acid is taken as a starting material, and water is taken as a reaction solvent to obtain the yellow oxidized azo and azo-stilbene dye, that is, Direct Yellow 11, through a condensation reaction in the presence of choline hydroxide.

2. The preparation method for a yellow oxidized azo and azo-stilbene dye according to claim 1, **characterized by** comprising the following steps:
(1) preparation of an aqueous solution of choline hydroxide: adding an aqueous solution of trimethylamine to a reactor, slowly adding ethylene oxide to the reactor, and maintaining a reaction temperature at 35-40°C for 3-4 h after feeding of the materials to obtain an aqueous solution of choline hydroxide, with a reaction route as follows: 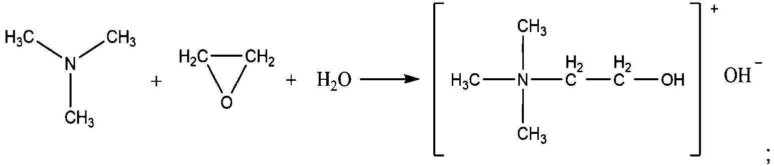
(2) condensation reaction: adding a 4-nitrotoluene-2-sulfonic acid solution to the aqueous solution of choline hydroxide, and allowing for a reaction at 45-85°C for 4-8 h to obtain a mixed solution containing Direct Yellow 11; and
(3) adding hydrochloric acid to the mixed solution containing Direct Yellow 11 obtained in the step (2) to adjust pH of the mixed solution to 7-9 to obtain a yellow transparent solution containing Direct Yellow 11.

3. The preparation method for a yellow oxidized azo and azo-stilbene dye according to claim 2, **characterized in that** in the step (1), an initial temperature is controlled at 5-15°C after adding an aqueous solution of trimethylamine to a reactor; and a feeding temperature does not exceed 30°C, and a total feeding duration is controlled at 2-3 h when slowly adding ethylene oxide to the reactor.

4. The preparation method for a yellow oxidized azo and azo-stilbene dye according to claim 2, **characterized in that** in the step (1), a mass concentration of the aqueous solution of trimethylamine is 25%-45%.

5. The preparation method for a yellow oxidized azo and azo-stilbene dye according to claim 2, **characterized in that** in the step (1), a molar ratio of the trimethylamine to the ethylene oxide is 1:1.05-1:1.35.

6. The preparation method for a yellow oxidized azo and azo-stilbene dye according to claim 2, **characterized in that** in the step (1), a mass concentration of the aqueous solution of choline hydroxide is 30%-50%.

7. The preparation method for a yellow oxidized azo and azo-stilbene dye according to claim 2, **characterized in that** in the step (2), a temperature is 20-45°C when adding a 4-nitrotoluene-2-sulfonic acid solution to the aqueous solution of choline hydroxide, with an addition process controlled at 30-60 min.

8. The preparation method for a yellow oxidized azo and azo-stilbene dye according to claim 2, **characterized in that** in the step (2), a mass concentration of the 4-nitrotoluene-2-sulfonic acid solution is 30%-55%, and a molar ratio of the 4-nitrotoluene-2-sulfonic acid to the choline hydroxide is 1:1.5-1:2.5.

9. The preparation method for a yellow oxidized azo and azo-stilbene dye according to claim 2, **characterized in that** a structural formula of Direct Yellow 11 is as follows: 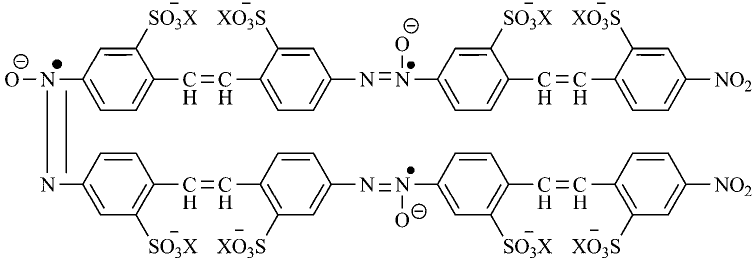 where X represents OH(CH₂)₂N^{⊕}(CH₃)₃ group.

10. A yellow oxidized azo and azo-stilbene dye prepared using the preparation method according to any one of claims 1-9, **characterized in that** the yellow oxidized azo and azo-stilbene dye is a mixture solution that takes Direct Yellow 11 as a main component, having a maximum absorption wavelength of 410-435 nm.
